# EUROPÄISCHE PATENTSCHRIFT

(11) **EP 3 192 684 B1**
(45) Veröffentlichungstag und Bekanntmachung des Hinweises auf die Patenterteilung: **02.10.2019**
(21) Anmeldenummer: 16198255.8
(22) Anmeldetag: 19.03.2015
(51) Int. Cl.: B60H 1/34

(54) **EINRICHTUNG ZUM VERSTELLEN VON LAMELLEN EINES LUFTAUSSTRÖMERS**
DEVICE FOR ADJUSTING OF LOUVER OF AN AIR OUTLET
DISPOSITIF DE DÉPLACEMENT DE LAMELLES D'UN DIFFUSEUR D'AIR

(30) Priorität: 14.04.2014 DE 102014105273
(43) Veröffentlichungstag der Anmeldung: 19.07.2017
(62) Teilanmeldung aus: 15712577.4
(73) Patentinhaber: Dr. Schneider Kunststoffwerke GmbH, 96317 Kronach-Neuses (DE)
(72) Erfinder: Grünbeck, Thomas, 96358 Teuschnitz (DE); Ebertsch, Reinhard, 96349 Steinwiesen (DE); Schneider, Falk, 02708 Dürrhennersdorf (DE); Wuttke, Christian, 02829 Markersdorf (DE)

(56) Entgegenhaltungen:
- EP-A2- 0 257 500
- DE-A1- 4 327 265
- DE-A1- 19 943 822
- DE-B3-102005 037 748
- FR-A1- 2 844 484
- FR-A1- 2 861 652
- JP-A- H0 952 519
- JP-A- H01 142 359
- JP-A- H10 232 047
- JP-A- 2005 003 289
- JP-A- 2007 152 974
- JP-U- H01 125 959
- JP-U- S57 188 038
- US-A- 5 738 580
- US-A1- 2004 142 653
- US-A1- 2006 172 680

## Beschreibung

Die vorliegende Erfindung betrifft eine Einrichtung zum Verstellen von im Wesentlichen senkrecht zueinander angeordneten Lamellen eines Luftausströmers. Luftausströmer, wie sie beispielsweise in Kraftfahrzeugen eingesetzt werden, weisen in der Regel senkrecht zueinander angeordnete Lamellen auf, die entweder manuell oder mit Hilfe von elektrischen Antrieben verschwenkt werden können.

Luftausströmer, bei welchen die Lamellen manuell verstellt werden können, weisen in der Regel eine Mechanik auf, die es erlaubt, über die Betätigung von Bedienelementen sowohl horizontal als auch vertikal verlaufene Lamellen zu verschwenken. Luftausströmer, die elektrisch angetrieben ihre Lamellen verschwenken können, weisen in der Regel mindestens zwei Stellmotoren auf, wobei ein Motor das Verstellen von beispielsweise horizontal verlaufenden Lamellen und ein Motor das Verstellen von vertikal verlaufenden Lamellen bewirkt.

Die elektrischen Stellmotoren können hierbei über Druckknöpfe oder sensorische Einrichtungen gesteuert werden. Es sind berührungsempfindliche Bedieneinheiten bekannt, wobei durch Berühren beispielsweise eines Displays Einstellungen vorgenommen und verändert werden können.

Sowohl beim manuellen Verstellen über mechanische Komponenten als auch beim motorischen Verstellen über beispielsweise sogenannte Stellmotoren weisen die Einrichtungen zum Verstellen der Lamellen von Luftausströmern mehrere Komponenten auf, die die manuelle oder motorische Bewegung übertragen und übersetzen, um ein gewünschtes Verstellen der Lamellen zu bewirken.

DE 10 2007 035 507 A1 offenbart eine Kraftfahrzeug-Belüftungseinrichtung mit einem Luftausströmer, der einen Rahmen umfasst, mit horizontalen und/oder vertikalen Luftleitlamellen, die durch den Rahmen getragen werden, wobei der Rahmen und/oder die Luftleitlamellen verschwenkbar ausgeführt sind, mit zumindest einer Verschwenkeinrichtung zum Verschwenken des Rahmens und/oder der Luftleitlamellen, mit einer Sensoreinrichtung zur Erzeugung und Ausgabe eines Sensorsignals als Reaktion auf die Bewegung eines Nutzers in der Umgebung des Luftausströmers und mit einer Steuereinrichtung, die derart eingerichtet und derart mit der Verschwenkeinrichtung und der Sensoreinrichtung gekoppelt ist, dass der Rahmen und/oder die Luftleitlamellen durch die Verschwenkeinrichtung in Abhängigkeit von dem Sensorsignal verschwenkt werden. Wenn sowohl die horizontal verlaufenden Lamellen als auch die vertikal verlaufenden Lamellen verschwenkt werden sollen, sind ein Stellmotor für die horizontal verlaufenden Lamellen und ein Stellmotor für die vertikal verlaufenden Lamellen vorgesehen.

DE 102 31 580 A1 offenbart eine in die Armaturentafel eines Kraftfahrzeuges einbaubare Lüftungsdüse, mit einer Vielzahl, jeweils um eine horizontale Achse schwenkbarer, einen Lamellenvorhang bildenden Horizontallamellen, mit denen eine Ausströmöffnung eines Gehäuses zumindest teilweise verschließbar ist, und mit mindestens einer Vertikallamelle, die im Austrittsbereich eines in das Gehäuse mündenden Ausströmkanals angeordnet ist und mit der durchVerschwenken um eine vertikale Achse ein durch den Ausströmkanal geführter Luftstrom umlenkbar ist, welche so ausgebildet ist, dass die Horizontal- und die Vertikallamellen an einen Antrieb angeschlossen und bei dessen Betätigung in eine vorbestimmte Position verschwenkbar sind.

DE 199 56 259 A1 offenbart eine Fahrzeug-Klimaanlage mit einer Klimatisierungseinheit, wobei Temperatureinstellungen für Klimatisierungszonen auf rechten und linken Sitzseiten unabhängig voneinander durchgeführt werden können. Die in einer gemeinsamen Richtung verlaufenden Lamellen von zwei benachbarten Luftausströmern können gemeinsam von einem Servomotor angesteuert werden.

JP H09 52519 A offenbart einen Luftausströmer, der ein drehbares Verstellelement mit einer Führungsnut aufweist, wobei in der Führungsnut ein Verstellelement zum Verschwenken von ersten Lamellen geführt ist. Das Verstellelement ist über eine Koppelstange mit zweiten Lamellen gekoppelt, wobei die zweiten Lamellen verschwenkt werden, wenn das Verstellelement verdreht wird.

Nachteilig bei den aus dem Stand der Technik bekannten Einrichtungen zum Verstellen von Lamellen eines Luftausströmers sind die Vielzahl von zu verwendenden Komponenten und die erforderlichen Bedienbewegungen (longitudinales Verschieben und/oder Drehen), wobei dies sowohl bei einem mechanischen als auch bei einem elektrischen Verstellen erforderlich ist. Bei manuell verstellbaren Luftausströmern muss mindestens ein Bedienelement beispielsweise horizontal und vertikal verschwenkt werden, um entsprechend zugeordnete Lamellen zu verschwenken. Bei Luftausströmern mit Stellmotoren für die Lamellen sind mindestens zwei Stellmotoren vorgesehen. Die Stellmotoren führen voneinander unabhängige Drehbewegungen aus. Darüber hinaus ist bei den vorstehend genannten Ausführungsformen aus dem Stand der Technik eine Vielzahl von Komponenten erforderlich. Die Luftausströmer aus dem Stand der Technik benötigen daher auch viel Bauraum, bspw. für mindestens zwei Stellmotoren und eine Vielzahl von Kinematikbauteilen.

Aufgabe der vorliegenden Erfindung ist es, eine Einrichtung zum Verstellen von im Wesentlichen senkrecht zueinander angeordneten verschwenkbaren Lamellen anzugeben, wobei die Anzahl der dafür erforderlichen Komponenten gegenüber bekannten Einrichtungen reduziert und das Verstellen von Lamellen vereinfacht ist.

Erfindungsgemäß wird die Aufgabe durch eine Einrichtung mit den in Anspruch 1 angegebenen technischen Merkmalen gelöst.

Vorteilhafte Weiterbildungen der Erfindung sind in den Unteransprüchen im Detail angegeben.

Eine erfindungsgemäße Einrichtung zum Verstellen von im Wesentlichen senkrecht zueinander angeordneten verschwenkbaren Lamellen eines Luftausströmers weist ein erstes drehbar gelagertes Verstellelement auf, wobei das erste Verstellelement mindestens einen zylinderförmigen Abschnitt aufweist, das erste Verstellelement in dem mindestens einen zylinderförmigen Abschnitt mindestens eine Führung aufweist, in welcher ein erstes Verlagerungselement geführt ist, wobei mindestens eine in einer ersten Richtung verlaufende Lamelle über das Verlagerungselement mit dem ersten Verstellelement gekoppelt ist, und mindestens eine in einer zweiten Richtung, senkrecht zur ersten Richtung verlaufende Lamelle mit dem ersten Verstellelement gekoppelt ist. Die Einrichtung weist zusätzlich ein zweites drehbar gelagertes Verstellelement auf, wobei das erste Verstellelement mit dem zweiten Verstellelement und das zweite Verstellelement mit mindestens einer in der zweiten Richtung verlaufenden Lamelle gekoppelt ist, wobei das zweite Verstellelement mindestens einen zylinderförmigen Abschnitt aufweist und das zweite Verstellelement in dem mindestens einen zylinderförmigen Abschnitt mindestens eine Führung aufweist, in der ein Verstellglied zum Verschwenken der mindestens einen in der zweiten Richtung verlaufenden Lamelle geführt ist und wobei die Drehachse des zweiten Verstellelements in einem rechten Winkel zur Drehachse des ersten Verstellelements verläuft.

Die Einrichtung ermöglicht über das erste Verstellelement ein Verschwenken der in der ersten Richtung verlaufenden Lamelle, wobei über die Kopplung der in der zweiten Richtung verlaufenden Lamelle mit dem ersten Verstellelement auch ein Verschwenken der in der zweiten Richtung verlaufenden Lamelle ermöglicht wird. Die Einrichtung ermöglicht somit allein über das erste Verstellelement ein Verschwenken von im Wesentlichen senkrecht zueinander angeordneten Lamellen. In der mindestens einen Führung des ersten Verstellelementes ist das erste Verlagerungselement geführt, welches bspw. ein Stift an der in der ersten Richtung verlaufenden Lamelle oder ein Verlagerungselement ist, welches mit einem Stift an der in der ersten Richtung verlaufenden Lamelle gekoppelt ist. Der Stift ist beabstandet zu einer Verschwenkachse der in der ersten Richtung verlaufenden Lamelle angeordnet, so dass eine Bewegung des Stifts die Lamelle verschwenkt, wobei die Lamelle über ihre Verschwenkachse drehbar/verschwenkbar in einem Gehäuse bspw.

über Lagerzapfen gelagert ist. Die in der zweiten Richtung verlaufende Lamelle ist gleichfalls wie die in der ersten Richtung verlaufende Lamelle bspw. über durch ihre Verschwenkachse verlaufende Lagerzapfen drehbar/verschwenkbar in einem Gehäuse gelagert und weist einen Stift auf, der beabstandet zu der Verschwenkachse an der in der zweiten Richtung verlaufenden Lamelle angeordnet ist. Die Einrichtung ist nicht auf die vorstehend beispielhaft angeführten Ausführungsbeispiele beschränkt und kann über verschiedene Mittel, Vorrichtungen und Komponenten ein Verschwenken von mindestens einer in der ersten Richtung verlaufenden Lamelle und ein Verschwenken von mindestens einer in der zweiten Richtung verlaufenden Lamelle bewirken, wobei auch mehrere in der ersten Richtung verlaufende Lamellen und mehrere in der zweiten Richtung verlaufende Lamellen verschwenkt werden können. Ferner kann ein Verdrehen des ersten Verstellelements ein Verschwenken der in der ersten Richtung verlaufenden Lamellen und ein Verschwenken der in der zweiten Richtung verlaufenden Lamellen bewirken, wobei die Lamellen in einer Richtung (erste und/oder zweite Richtung) verschieden zueinander verschwenkt werden können und auch nur ein Verschwenken von in der ersten Richtung verlaufenden Lamellen oder ein Verschwenken von in der zweiten Richtung verlaufenden Lamellen möglich ist.

Das Verlagerungselement kann zudem ein erstes Stellglied aufweisen, das in der mindestens einen Führung an der äußeren Umfangsfläche des zylinderförmigen Abschnitts des ersten Verstellelements geführt ist.

Das Verschwenken der in der ersten Richtung verlaufenden Lamelle wird durch die mindestens eine Führung an der äußeren Umfangsfläche des ersten Verstellelementes erreicht. Beim Verdrehen des ersten Verstellelementes wird das erste Stellglied in der Führung geführt und überträgt die Bewegung auf die in der ersten Richtung verlaufenden Lamelle, wobei diese entsprechend der Führung verschwenkt wird. Das Verdrehen des ersten Verstellelementes kann linksherum bzw. rechtsherum erfolgen. Hierbei ergeben sich in Abhängigkeit des Grades des Verdrehens ein entsprechendes Verschwenken der in der ersten Richtung verlaufenden Lamelle und ein entsprechendes Verschwenken der in der zweiten Richtung verlaufenden Lamelle.

Insbesondere können Abschnitte der mindestens einen Führung mit einer Steigung und einer Steigung gleich Null so gewählt sein, dass sämtliche Stellungen der in der zweiten Richtung verlaufenden Lamelle ausgeführt werden können, ohne dass die in der ersten Richtung verlaufenden Lamelle verschwenkt werden muss.

Das Verlagerungselement kann bspw. über Führungsmittel parallel zur Längsachse des ersten Verstellelements verschiebbar sein. Die Führungsmittel stellen jeweils sicher, dass das erste Verlagerungselement eine Bewegung nur parallel zur Längsachse des ersten Verstellelements durchführen kann. Das erste Verlagerungselement ist mit der in der ersten Richtung verlaufenden Lamelle gekoppelt, so dass die longitudinale Bewegung des Verlagerungselementes ein Verschwenken der in der ersten Richtung verlaufenden Lamelle bewirkt. Ferner weist das Verlagerungselement das erste Stellglied auf, welches in der Führung des ersten Verstellelements geführt ist. Wird das erste Verstellelement um seine Längsachse gedreht, bewegt sich das erste Stellglied mit dem Verlagerungselement entsprechend der Drehrichtung des ersten Verstellelementes nach oben oder unten.

Die Drehachse des zweiten Verstellelements verläuft in einem rechten Winkel zu der Drehachse des ersten Verstellelements. Die Rotation des ersten Verstellelements bewirkt stets eine Rotation des zweiten Verstellelements.

Das zweite Verstellelement weist mindestens einen zylinderförmigen Abschnitt und in dem mindestens einen zylindrischen Abschnitt mindestens eine Führung auf, in der ein Verstellglied zum Verschwenken der mindestens einen in der zweiten Richtung verlaufenden Lamelle geführt ist. Die Drehachse des zweiten Verstellelements verläuft orthogonal zur Drehachse des ersten Verstellelements. Das zweite Verstellelement weist wie das erste Verstellelement mindestens eine Führung auf, so dass bei einem Drehen des ersten Verstellelements um dessen Längsachse die in der ersten Richtung verlaufende Lamelle verschwenkt wird und über die Koppelung des ersten Verstellelements mit dem zweiten Verstellelement auch das zweite Verstellelement um dessen Längsachse gedreht und die in der zweiten Richtung verlaufende Lamelle verschwenkt wird. Bspw. kann die in der zweiten Richtung verlaufende Lamelle einen Stift aufweisen, der in einer Ausführungsform das Verstellglied ist, wobei der Stift beabstandet zu der Verschwenkachse der in der zweiten Richtung verlaufenden Lamelle angeordnet ist. Der Stift ist in der Führung aufgenommen, so dass ein Drehen des zweiten Verstellelements in Abhängigkeit der Ausbildung der mindestens einen Führung ein Verschwenken der in der zweiten Richtung verlaufenden Lamelle bewirkt.

Das mindestens eine zweite Verstellelement kann einen umlaufenden Zahnradabschnitt aufweisen, der mit einem umlaufenden Zahnradabschnitt des ersten Verstellelements in Eingriff steht. Die umlaufenden Zahnradabschnitte können sich sowohl um den gesamten Umfang eines zylinderförmigen Abschnitts eines Verstellelements als auch nur um einen Teil eines zylinderförmigen Abschnitts eines Verstellelements erstrecken. Die Zahnradschnitte können im Wesentlichen als Zahnräder oder Kegelräder bzw. Zahnrad- oder Kegelradabschnitte ausgebildet sein. Über die Zahnradabschnitte wird eine einfache Koppelung des ersten Verstellelements und des zweiten Verstellelements erreicht. Die Zahnradabschnitte können auch so ausgebildet sein, dass eine Über- oder Untersetzung der Drehbewegung des ersten Verstellelements oder des zweiten Verstellelements zu der Drehbewegung des zweiten Verstellelements oder des ersten Verstellelements erfolgt.

Das zweite Verstellelement weist mindestens eine Führung auf und in der mindestens einen Führung ist ein Verstellglied zum Verschwenken der mindestens einen in der zweiten Richtung verlaufenden Lamelle führbar aufgenommen. Die Verstellglieder können aber auch jeweils mit einer in der zweiten Richtung verlaufenden Lamelle gekoppelt sein, wobei die Verstellglieder bspw. Stifte sind, die an den in der zweiten Richtung verlaufenden Lamellen beabstandet zur Verschwenkachse angeordnet sind. In einer anderen Ausführung sind die Stifte der in der zweiten Richtung verlaufenden Lamellen in Öffnungen in der Koppelstange aufgenommen und die Koppelstage weist einen zusätzlichen Stift (Verstellglied) auf, der in der Führung geführt ist. Es kann aber auch ein Stift einer Gruppe von in der zweiten Richtung verlaufenden Lamellen eine größere Länge als die anderen zu dieser Gruppe gehörenden Lamellen aufweisen und dieser Stift ragt über eine Öffnung in der Koppelstange hinaus bis in die Führung in dem zweiten Verstellelement. Bei mindestens zwei Führungen können diese so ausgebildet sein, dass die der jeweiligen Führung zugeordneten Lamellen sowohl gemeinsam um einen bestimmten Betrag als auch um verschiedene Beträge verschwenkt werden ("Spot"- und "Diffus"-Stellung).

Die mindestens eine Führung kann als Helixkurve ausgebildet sein. Hierbei erfolgt beim Verdrehen des ersten Verstellelementes und/oder des zweiten Verstellelementes ein Verschwenken der in der ersten Richtung verlaufenden Lamelle und/oder der in der zweiten Richtung verlaufenden Lamelle in Abhängigkeit der Steigung der Helixkurve. Bspw. wird das Verlagerungselement während des Verdrehens des ersten Verstellelementes beispielsweise nach oben oder unten (in Abhängigkeit der Drehrichtung des ersten Verstellelementes) bewegt, wobei ein Verschwenken der in der ersten Richtung verlaufenden Lamelle nach oben und unten erfolgt. Gleichfalls kann eine in der zweiten Richtung verlaufenden Lamelle entsprechend der Helixkurve der mindestens einen Führung in dem zylinderförmigen Abschnitt des zweiten Verstellelements verschwenkt werden.

Die mindestens eine Führung kann als abgestufte Helixkurve ausgebildet sein, wobei die abgestufte Helixkurve gegenüber der Querschnittsfläche des zylinderförmigen Abschnitts des ersten Verstellelements und/oder des zylinderförmigen Abschnitts des zweiten Verstellelements Abschnitte mit einer Steigung gleich Null und Abschnitte mit einer Steigung aufweist. Die abgestufte Helixkurve bewirkt hierbei, dass die der Helixkurve zugeordneten Lamelle während des Verdrehens des ersten und/oder des zweiten Verstellelementes nicht verschwenkt wird, wenn sich das Verlagerungselement und/oder das Verstellglied in einem Abschnitt der Führung mit Steigung gleich Null befinden. Ein Verschwenken einer Lamelle erfolgt nur in den Abschnitten der Führung mit einer Steigung. Befindet sich bspw. das Verlagerungselement in einem Abschnitt ohne Steigung und wird das erste Verstellelement weiter verdreht, so erfolgt kein Verschwenken der in der ersten Richtung verlaufenden Lamelle, jedoch kann ein Verschwenken der in der zweiten Richtung verlaufenden Lamelle erfolgen, wenn die Führung in dem zweiten Verstellelement entsprechend ausgebildet ist. Hierbei kann in Abhängigkeit der Ausgestaltung der abgestuften Helixkurve erreicht werden, dass bestimmte Stellungen der Lamelle(n) auf Grund der Anordnung und Anzahl der Abschnitte mit einer Steigung gleich Null und der Abschnitte mit einer Steigung erfolgen.

Ferner können sich die Abschnitte mit einer Steigung gleich Null und die Abschnitte mit einer Steigung abwechseln.

In weiteren Ausgestaltungen ist vorgesehen, dass sich ein Abschnitt mit einer Steigung gleich Null und ein Abschnitt mit einer Steigung gemeinsam im Wesentlichen um den halben Umfang des ersten Verstellelements und/oder des zweiten Verstellelements erstrecken. In einer solchen Ausgestaltung kann bspw. eine in der zweiten Richtung verlaufende Lamelle von einer ersten Extremstellung in eine zweite Extremstellung überführt werden (durch Verdrehen des ersten Verstellelementes), wobei die in der ersten Richtung verlaufende Lamelle nicht verschwenkt wird. Ebenso kann auch umgekehrt ein Verschwenken der in der zweiten Richtung verlaufenden Lamelle von einer ersten Extremstellung in eine zweite Extremstellung erfolgen, wobei die in der ersten Richtung verlaufende Lamelle nicht verschwenkt wird.

Da Lamellen in der Regel nicht bis zu 90° verschwenkt werden, können sich die Abschnitte mit einer Steigung gleich Null nur annähernd bis zu dem halben Umfang des ersten Verstellelements und/oder des zweiten Verstellelements erstrecken, jedoch nicht den gesamten halben Umfang umfassen. Ferner können die Abschnitte mit einer Steigung nur eine geringe Steigung aufweisen, so dass die Lamelle beim Übergang von einem ersten Abschnitt ohne Steigung in einen zweiten Abschnitt ohne Steigung nur um ein bestimmtes geringes Maß verschwenkt werden. Je mehr entsprechende Abschnitte vorgesehen sind, desto feiner können die Grade des Verschwenkens der Lamelle(n) eingestellt werden.

Die in der ersten Richtung verlaufende Lamelle kann über eine erste Koppeleinrichtung mit weiteren in der ersten Richtung verlaufenden Lamellen verbunden sein und/oder die in der zweiten Richtung verlaufende Lamelle kann über eine zweite Koppeleinrichtung mit weiteren in der zweiten Richtung verlaufenden Lamellen verbunden sein. Die erste Koppeleinrichtung und die zweite Koppeleinrichtung bewirken ein gemeinsames Verschwenken der in der ersten Richtung verlaufenden Lamellen und ein gemeinsames Verschwenken der in der zweiten Richtung verlaufenden Lamellen.

Die erste Koppeleinrichtung kann bspw. einen ersten Verstellabschnitt mit einem Langloch und das Verlagerungselement kann einen Mitnehmer aufweisen, der in dem Langloch aufgenommen ist. Hierbei ergibt sich konstruktiv eine einfache Übertragung der Verschiebebewegung des Verlagerungselementes parallel zur Längsachse des ersten Verstellelements in eine Schwenkbewegung der in der ersten Richtung verlaufenden Lamellen über die erste Koppeleinrichtung. Die erste Koppeleinrichtung ist mit den in der ersten Richtung verlaufenden Lamellen beispielsweise über Zapfen verbunden, die beabstandet zu Lagerzapfen der in der ersten Richtung verlaufenden Lamelle angeordnet sind. Die in der ersten Richtung verlaufenden Lamellen sind hierbei über die Lagerzapfen verschwenkbar. Die Lagerzapfen definieren dabei die Schwenkachse. Wird nun die erste Koppeleinrichtung über den Mitnehmer des Verlagerungselementes parallel zur Längsachse des Verstellelementes analog zur Verlagerung des Verlagerungselementes bewegt, so bewirkt die erste Koppeleinrichtung ein Verschwenken der in der ersten Richtung verlaufenden Lamellen. Das Langloch in dem ersten Verstellabschnitt dient dazu, ein Verschwenken der in der ersten Richtung verlaufenden Lamellen unabhängig von deren Grad des Verschwenkens sicherzustellen, ohne dass es zu einem Verkanten oder Blockieren kommt.

Ferner kann in weiteren Ausführungen auch ein Verschwenken der in der zweiten Richtung verlaufenden Lamellen analog zu einem Verschwenken der in der ersten Richtung verlaufenden Lamellen erfolgen. Hierzu ist ein zweites Verstellelement mit mindestens einer Führung vorgesehen, wobei das Verstellglied ebenso mit einem Verlagerungselement zum Verschwenken der in der zweiten Richtung verlaufenden Lamellen gekoppelt ist.

Eine erste Gruppe von in der ersten Richtung verlaufenden Lamellen kann über das erste Verlagerungselement mit dem ersten Verstellelement und mindestens eine zweite Gruppe von in der ersten Richtung verlaufenden Lamellen kann über ein zweites Verlagerungselement mit dem ersten Verstellelement gekoppelt sein und/oder eine erste Gruppe von in der zweiten Richtung verlaufenden Lamellen kann über eine erste Koppelvorrichtung mit dem zweiten Verstellelement und mindestens eine zweite Gruppe von in der zweiten Richtung verlaufenden Lamellen kann über eine zweite Koppelvorrichtung mit dem zweiten Verstellelement gekoppelt sein. Die ersten und zweiten Gruppen der in der ersten Richtung verlaufenden Lamellen können dabei gemeinsam um einen bestimmten Betrag oder um einen zueinander verschiedenen Betrag verschwenkt werden. Darüber hinaus können auch die ersten und zweiten Gruppen der in der zweiten Richtung verlaufenden Lamellen gemeinsam um einen bestimmten Betrag oder um einen zueinander verschiedenen Betrag verschwenkt werden.

Eine Vielzahl von in der ersten Richtung verlaufenden Lamellen kann über jeweils ein separates Verlagerungselement in separaten Führungen in dem ersten Verstellelement mit dem ersten Verstellelement gekoppelt sein und/oder eine Vielzahl von in der zweiten Richtung verlaufenden Lamellen kann jeweils in einer separaten Führung in dem zweiten Verstellelement mit dem zweiten Verstellelement gekoppelt sein. In diesen Ausführungen können alle in der ersten Richtung verlaufenden Lamellen gemeinsam um einen bestimmten Betrag oder jede Lamelle um einen verschiedenen Betrag zu den anderen in der ersten Richtung verlaufenden Lamellen verschwenkt werden. Weiter können auch alle in der zweiten Richtung verlaufenden Lamellen gemeinsam um einen bestimmten Betrag oder jede Lamelle um einen verschiedenen Betrag zu den anderen in der zweiten Richtung verlaufenden Lamellen verschwenkt werden. Die Lamellen in der ersten Richtung können dabei auch unterschiedlich zu den Lamellen in der zweiten Richtung verschwenkt werden. Das Verschwenken der Lamellen hängt dabei auch von der Ausbildung der Führung(en) und Führungsbahnen sowie der Abstände und Ausbildungen der Stellglieder und Verstellglieder ab.

Das erste Verstellelement oder das zweite Verstellelement können mit einer Antriebswelle und/oder mit einem Elektromotor oder einem Stellrad gekoppelt sein und/oder der Elektromotor kann elektrisch mit Mitteln zum Einstellen der Drehzahl über Eingabevorrichtungen verbunden oder die Antriebswelle kann über mechanische Vorrichtungen steuerbar sein. Über die Antriebswelle oder den Elektromotor, wobei auch der Elektromotor eine Antriebswelle aufweisen oder mit einer Antriebswelle gekoppelt sein kann, die bzw. der mit dem ersten Verstellelement oder dem zweiten Verstellelement verbunden ist, können das erste Verstellelement oder das zweite Verstellelement im Uhrzeigersinn oder gegen den Uhrzeigersinn gedreht werden. Das Verdrehen im Uhrzeigersinn oder gegen den Uhrzeigersinn bewirkt sowohl ein Verschwenken der in der ersten Richtung verlaufenden Lamellen als auch ein Verschwenken der in der zweiten Richtung verlaufenden Lamellen. Es ist daher möglich, über ein ausführendes Element (beispielsweise Elektromotor) sämtliche Verschwenkbewegungen der Lamellen eines Luftausströmers zu realisieren. Ferner kann die Antriebswelle mit einem Stellrad gekoppelt sein, wobei das Stellrad bspw. in dem Armaturenbrett eines Kraftfahrzeugs angeordnet ist und ein manuelles Verstellen ermöglicht.

Ferner kann beispielsweise die Antriebswelle mit einem Bedienrad verbunden sein, welches in einem Armaturenbrett eines Kraftfahrzeugs angeordnet ist. Wird das Bedienrad verdreht, so erfolgen ein Verschwenken der in der ersten Richtung verlaufenden Lamellen und ein Verschwenken der in der zweiten Richtung verlaufenden Lamellen. Alternativ dazu können an einem Armaturenbrett oder an anderen Stellen in einem Kraftfahrzeug (z. B. Mittenkonsole) Eingabemittel vorgesehen sein, die den Elektromotor ansteuern. Als Beispiel sind hierbei Druckknöpfe, Taster, Schieber oder sogenannte berührungsempfindliche Displays zu nennen.

Die Antriebswelle und/oder der Elektromotor können auch mit einem Getriebe gekoppelt sein. Ein Getriebe ermöglicht bspw. die Übersetzung der Drehgeschwindigkeit von langsam drehenden Elektromotoren in höhere Drehgeschwindigkeiten, um ein schnelleres Verstellen der Lamellen zu erreichen.

Bei den aus dem Stand der Technik bekannten Einrichtungen sind für in einer ersten Richtung verlaufende Lamellen und in einer zweiten Richtung verlaufende Lamellen jeweils ein Elektromotor vorgesehen. Solche Einrichtungen weisen deshalb eine Vielzahl von Komponenten auf. Dies erfordert eine komplexe Ansteuerung. Ferner benötigen die Einrichtungen aus dem Stand der Technik einen großen Bauraum. Entsprechend sind die Einrichtungen aus dem Stand der Technik auch im Hinblick auf die Kosten nachteilig. Gegenüber aus dem Stand der Technik bekannten Einrichtungen benötigen die hierin beschriebenen Einrichtungen bspw. nur einen Elektromotor, der sowohl ein Verschwenken der in der ersten Richtung verlaufenden Lamellen als auch ein Verschwenken der in der zweiten Richtung verlaufenden Lamellen realisieren kann. Darüber hinaus erfolgt die Aufteilung und Übertragung der Drehbewegung beispielsweise des Elektromotors nur über das erste Verstellelement oder das zweite Verstellelement. Weitere Komponenten sind nicht erforderlich. Die hierin beschriebenen Ausführungen kommen mit wenigen Komponenten, einem geringen Bauraum und einer einfachen Steuerung aus. Auch im Hinblick auf die Kosten sind die hierin beschriebenen Ausführungen daher vorteilhaft.

Bei einer Ausführung mit einem Elektromotor kann auch eine sogenannte "Ventilatorfunktion" erreicht werden, wobei ein diffuser Luftstrom aus dem Luftausströmer austritt. Hierbei erfolgt ein kontinuierliches Verschwenken der in der ersten Richtung verlaufenden Lamellen und der in der zweiten Richtung verlaufenden Lamellen durch ein kontinuierliches Verdrehen des ersten und/oder zweiten Verstellelementes.

Das erste Verstellelement oder das zweite Verstellelement können mit einem dritten Verstellelement und das dritte Verstellelement kann mit einer Vorrichtung zum Öffnen und Schließen der Luftzufuhr zu dem Luftausströmer gekoppelt sein. Das dritte Verstellelement kann bspw. eine Führung aufweisen, in der ein Mittel geführt ist, welches das Öffnen und Schließen der Vorrichtung nach Maßgabe der Position des Mittels in der Führung regelt. Das dritte Verstellelement kann ebenfalls einen zylinderförmigen Abschnitt mit einer Führung aufweisen oder scheibenförmig ausgebildet sein.

Das erste Verstellelement oder das zweite Verstellelement können mit einer Vorrichtung zum Öffnen und Schließen der Luftzufuhr gekoppelt sein. Das erste Verstellelement oder das zweite Verstellelement können dazu eine zusätzliche Führung aufweisen, in der ein Mittel zum Öffnen und Schließen der Vorrichtung geführt ist, wobei nach Maßgabe der Position des Mittels in der Führung das Öffnen und Schließen der Vorrichtung erfolgt. Das erste Verstellelement oder das zweite Verstellelement können auch Elemente aufweisen, die ein Öffnen und Schließen der Vorrichtung steuern. Bspw. kann ein weiteres Stellglied vorgesehen sein, das mit der Vorrichtung gekoppelt ist.

Das erste Verstellelement, das zweite Verstellelement oder das dritte Verstellelement können in weiteren Ausführungen eine Führung aufweisen, in welcher ein Verstellglied zum Öffnen und Schließen der Vorrichtung geführt ist.

In Ausführungen mit einer endlichen Führung in dem zylinderförmigen Abschnitt des ersten Verstellelementes und/oder des zweiten Verstellelements kann diese an einem oberen und unteren bzw. linken und rechten Ende begrenzt sein, wobei sich in einer Neutralstellung der Lamellen des Luftausströmers das Verlagerungselement und/oder ein Verstellglied vorzugsweise in einer mittleren Position entlang der Führung befindet. Soll nun ein diffuser Luftstrom eingestellt werden, so würde der Elektromotor beginnen, entweder links- oder rechtsherum zu drehen und sich nach dem Erreichen des Endes der Führung in die entgegengesetzte Richtung drehen, bis beispielsweise das untere Ende der Führung erreicht ist, und von dort wiederum sich in die entgegengesetzte Richtung drehen. Durch das kontinuierliche Drehen erfolgt ständig ein Verschwenken der in der ersten Richtung verlaufenden Lamellen und der in der zweiten Richtung verlaufenden Lamellen.

Um in Ausführungen mit einer endlichen Führung/Führungsbahn zu verhindern, dass das erste Verstellelement oder das zweite Verstellelement über einen oberen und einen unteren Endpunkt der Führungen hinaus verdreht werden, können die Führung als Nut ausgebildet sein. In den Endpositionen liegen dann das erste Verlagerungselement, das erste Stellglied, das Verstellglied, der Stift etc. an der Wand der Führung an und verhindern ein Weiterdrehen.

Der Durchmesser und die Höhe des ersten Verstellelements, des zweiten Verstellelements und/oder des dritten Verstellelements sind an die Ausgestaltung eines Luftausströmers anzupassen. Ferner sind die Führung(en)/Führungsbahn(en) an einen Luftausströmer und die gewünschten Verschwenkgrade der Lamellen des Luftausströmers anzupassen. Insbesondere sind die Länge der Führung(en), die Anzahl der Abschnitte mit einer Steigung gleich Null, die Anzahl der Abschnitte mit einer Steigung und die Steigung so zu wählen, dass die gewünschten Verschwenkstellungen realisiert werden. Darüber hinaus sind die Länge der Abschnitte mit einer Steigung gleich Null und die Länge der Abschnitte mit einer Steigung entsprechend der gewünschten Ausgestaltung eines Luftausströmers festzulegen. Gleiches gilt für die Endlosführungsbahnen. Die Führungsnuten sind ebenfalls in Abhängigkeit der Gegebenheiten des Luftausströmers und der gewünschten Verschwenkgrade und Stellungen der Lamellen festzulegen.

In weiteren Ausführungen sind die mindestens eine Führung des ersten Verstellelements und/oder des zweiten Verstellelements so ausgebildet, dass sie sich geschlossen um die Umfangsfläche des zylinderförmigen Abschnitts des ersten Verstellelements und/oder des zweiten Verstellelements erstrecken. Anstelle einer so entstandenen Ringnut könnte die Führung auch eine Steigung aufweisen (eventuell mit Abschnitten mit einer Steigung gleich Null). Die Führung würde dabei ausgehend von einem unteren Scheitelpunkt ansteigen und nach einem oberen Scheitelpunkt wieder nach unten zu dem unteren Scheitelpunkt verlaufen. Es können dabei mehrere in Längsrichtung des ersten Verstellelements und/oder des zweiten Verstellelements übereinander bzw. nebeneinander angeordnete Führungsbahnen vorgesehen sein, so dass lediglich ein Drehen in einer Richtung (im Uhrzeigersinn oder gegen den Uhrzeigersinn) durchgeführt werden muss, um alle Stellungen der in der ersten Richtung verlaufenden Lamellen und der in der zweiten Richtung verlaufenden Lamellen zu erreichen. Hierbei kann auch einfach eine Ventilatorfunktion für einen Luftausströmer bereitgestellt werden, wobei die austretende Luft großflächig verteilt wird.

Der Vorteil einer solchen Ausführung besteht darin, dass das Verstellelement in nur einer Richtung (im Uhrzeigersinn oder gegen den Uhrzeigersinn) gedreht werden muss und auch ein Endlosbetrieb ohne Erreichen eines Endpunktes (der mindestens einen Führung) möglich ist.

Bis auf den Elektromotor können sämtliche Komponenten der vorstehend beschriebenen Einrichtungen sowie eines Luftausströmers aus Kunststoff bestehen und leicht in einem Spritzgussverfahren hergestellt werden. Es werden zudem gegenüber aus dem Stand der Technik bekannten Einrichtungen zum Verstellen von im Wesentlichen senkrecht zueinander angeordneten Lamellen eines Luftausströmers weniger Komponenten benötigt und nur durch Betätigen (Drehen im Uhrzeigersinn und/oder Drehen entgegen dem Uhrzeigersinn) eines ausführenden Elementes (erstes/zweites Verstellelement) sowohl ein Verschwenken von in der ersten Richtung verlaufenden Lamellen als auch ein Verschwenken von in der zweiten Richtung verlaufenden Lamellen erreicht.

Weitere Vorteile, Merkmale und Ausgestaltungsmöglichkeiten ergeben sich aus der nachfolgenden Figurenbeschreibung von nicht einschränkend zu verstehenden Ausführungsbeispielen.

In den Zeichnungen zeigen
- Fig. 1 - 11: schematische Darstellungen von Komponenten eines Luftausströmers einer ersten, nicht beanspruchten Ausführungsform;
- Fig. 12 -15: schematischen Darstellungen von Komponenten eines Luftausströmers einer zweiten Ausführungsform; und
- Fig. 16: Komponenten weiterer Ausführungsformen eines Luftausströmers.

In den Figuren mit gleichen Bezugszeichen versehene Teile entsprechen im Wesentlichen einander, solange nichts anderes angegeben ist.

Bei den im Folgenden beschriebenen Einrichtungen zum Verstellen von Lamellen eines Luftausströmers werden Komponenten, die nicht wesentlich zum Verständnis der hierin beschriebenen technischen Lehre sind, nicht beschrieben, wobei einem Fachmann bekannt ist, wie eine entsprechende Umsetzung und Ausgestaltung zu erfolgen hat.

### Erste Ausführungsform

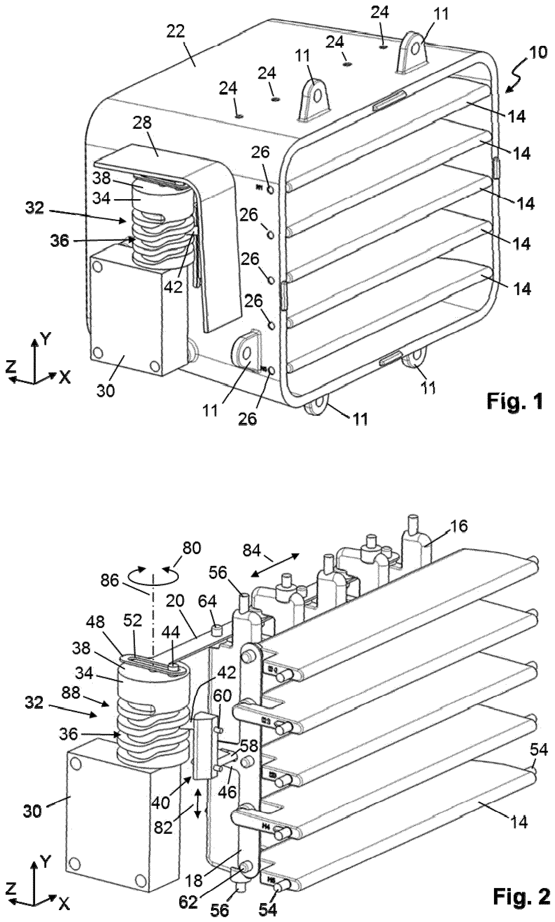

Die Fig. 1 bis 11 zeigen eine erste nicht beanspruchte Ausführungsform eines Luftausströmers 10, die das Verständnis der Erfindung erleichtert.

Fig. 1 zeigt eine schematische Darstellung von Komponenten eines Luftausströmers 10 in perspektivischer Ansicht. Der Luftausströmer 10 weist ein Gehäuse 22 auf. An dem Gehäuse 10 sind Vorsprünge 11 angeordnet.

Die Vorsprünge 11 weisen Öffnungen auf. Über die Vorsprünge 11 kann das Gehäuse 22 mit einer in Fig. 1 nicht dargestellten Blende 12 über Verbindungselemente 13 der Blende 12 verbunden werden. Hierzu können beispielsweise Schrauben in die Öffnungen der Vorsprünge 11 eingebracht werden, um das Gehäuse 22 mit einer Blende 12 zu verbinden. Alternativ dazu können auch Stifte oder Rastmittel in die Öffnungen der Vorsprünge 11 eingebracht werden, um das Gehäuse 22 mit einer Blende 12 zu verbinden. Andere Verbindungen sind ebenfalls möglich. So kann das Gehäuse auch einstückig mit einer Blende 12 ausgebildet sein.

Das Gehäuse 22 weist Öffnungen 24 auf, wobei die Öffnungen 24 sowohl auf der oberen Seite des Gehäuses 22 und gegenüberliegend an der unteren Seite (in Fig. 1 nicht dargestellt) angeordnet sind. Die Öffnungen 24 dienen zur Aufnahme von Lagerzapfen 56 von in der zweiten Richtung Y laufenden Lamellen 16. Die in der zweiten Richtung Y verlaufenden Lamellen 16 sind daher um die Lagerzapfen 56 verschwenkbar in den Öffnungen 24 gelagert.

Das Gehäuse 22 weist Öffnungen 26 auf. Die Öffnungen 26 sind sowohl, wie in Fig. 1 dargestellt, auf der einen Seite des Gehäuses 22 angeordnet sowie auf der gegenüberliegenden Seite. In den Öffnungen 26 sind Lagerzapfen 54 von in der ersten Richtung X verlaufenden Lamellen 14 aufgenommen. Die Lamellen 14 sind über die Lagerzapfen 54 verschwenkbar in den Öffnungen 26 gelagert.

An einer Seite ist ein Elektromotor 30 angeordnet. Der Elektromotor 30 ist mit einem ersten Verstellelement 32 gekoppelt. Das erste Verstellelement 32 kann über den Elektromotor 30 sowohl in als auch gegen den Uhrzeigersinn verdreht werden. Das erste Verstellelement 32 weist eine obere Fläche 38 auf, an der ein zweites Stellglied 44 angeordnet ist, welches in einem Langloch 50 eines zweiten Verstellabschnitts 48 aufgenommen ist. Das erste Verstellelement 32 weist einen im Wesentlichen zylinderförmigen Abschnitt 88 auf. Das erste Verstellelement 32 ist in der ersten Ausführungsform im Wesentlichen über die gesamte Länge zylinderförmig ausgebildet. Zudem weist das erste Verstellelement 32 an seiner äußeren Umfangsfläche 34 eine Führung 36 auf, die als Nut in die äußere Umfangsfläche 34 eingebracht ist. In der Führung 36 ist ein erstes Stellglied 42 geführt. Das erste Stellglied 42 ist mit einem Verlagerungselement 40 verbunden (in Fig. 1 nicht dargestellt).

Das Verlagerungselement 40 und weitere Komponenten sind von einer optional vorgesehenen Abdeckung 28 in der Ansicht von Fig. 1 verborgen.

Fig. 2 zeigt eine weitere schematische Darstellung von Komponenten eines Luftausströmers 10 in perspektivischer Ansicht. Die in Fig. 2 dargestellte Ansicht stellt die Komponenten einer Einrichtung zum Verschwenken von Lamellen 14 und 16 eines Luftausströmers 10 ohne Gehäuse 22 und Blende 12 dar. Die in der ersten Richtung X verlaufenden Lamellen 14 weisen beabstandet zu den Lagerzapfen 54 Zapfen 62 auf. Die Zapfen 62 sind in Öffnungen 66 einer ersten Koppeleinrichtung 18 aufgenommen. Wird die erste Koppeleinrichtung 18 in Richtung des Pfeils 82 bewegt, so erfolgt ein Verschwenken der in der ersten Richtung X verlaufenden Lamellen 14 um die Lagerzapfen 54.

Die in der zweiten Richtung Y verlaufenden Lamellen 16 weisen Zapfen 64 auf, die mit einer zweiten Koppeleinrichtung 20 verbunden sind. Die Zapfen 64 sind beabstandet zu den Lagerzapfen 56 angeordnet, so dass bei einem Bewegen der zweiten Koppeleinrichtung 20 in Richtung des Pfeils 84 die in der zweiten Richtung Y verlaufenden Lamellen 16 um die Lagerzapfen 56 verschwenkt werden. Die Zapfen 64 der Lamellen 16 sind in Öffnungen 68 der zweiten Koppeleinrichtung 20 aufgenommen.

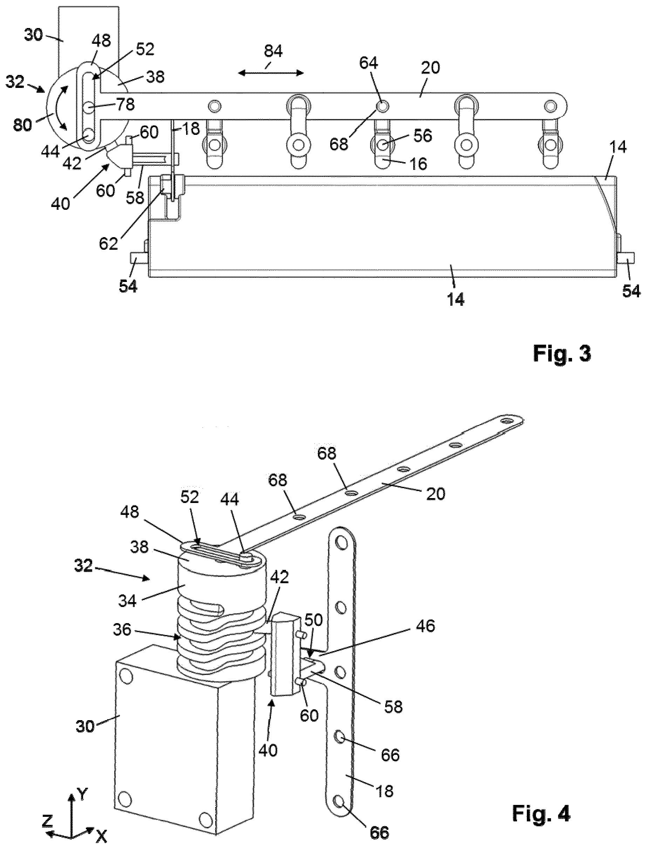

Die erste Koppeleinrichtung 18 weist einen ersten Verstellabschnitt 46 mit einem Langloch 50 auf. In dem Langloch 50 (siehe Fig. 4) ist ein Mitnehmer 58 gelagert. Der Mitnehmer 58 ist mit einem Verlagerungselement 40 verbunden. Das Verlagerungselement 40 weist seitlich Führungsstifte 60 auf. Über die Führungsstifte 60 und in Fig. 2 nicht dargestellte Führungsleisten 76 kann das Verlagerungselement 40 in Richtung des Pfeils 82 bewegt werden. An dem Verlagerungselement 40 ist ferner das erste Stellglied 42 angeordnet. Das erste Stellglied 42 greift in die Führung 36 des ersten Verstellelementes 32.

Die zweite Koppeleinrichtung 20 weist einen zweiten Verstellabschnitt 48 mit einem Langloch 52 auf. In dem Langloch 52 ist ein zweites Stellglied 44 aufgenommen.

Das zweite Stellglied 44 ist im Bereich der Umfangskante der oberen Fläche 38 des ersten Verstellelementes 32 angeordnet. Wird das erste Verstellelement 32 über den Elektromotor 30 um die Längsachse 86 gedreht, erfolgt hierbei ein Verdrehen des zweiten Stellglieds 44 um die Längsachse 86 des ersten Verstellelementes 32 in Richtung des Pfeils 80. Dadurch ergibt sich eine Verlagerung der zweiten Koppeleinrichtung 20 in Richtung des Pfeils 84. Beim Verdrehen des ersten Verstellelementes 32 um die Längsachse 86 in Richtung des Pfeils 80 wird durch das in der Führung 36 aufgenommene erste Stellglied 42 zudem das Verlagerungselement 40 nach oben bzw. unten in Richtung des Pfeils 82 bewegt.

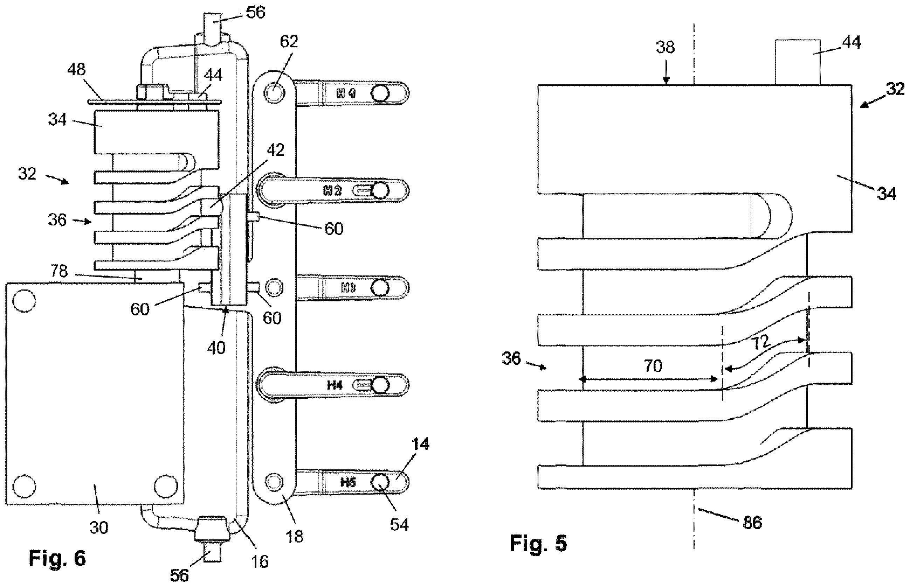

Die Führung 36 ist im Wesentlichen als abgestufte Helix ausgebildet. Die Führung 36 weist hierbei Abschnitte mit einer Steigung 72 und Abschnitte ohne Steigung 70 auf (siehe Fig. 5) .

Die in Fig. 2 gezeigte Stellung der Lamellen 14 und 16 entspricht einer Neutralstellung, wobei die in der ersten Richtung X verlaufenden Lamellen 14 und die in der zweiten Richtung Y verlaufenden Lamellen 16 nicht aus ihrer Ausgangsstellung verschwenkt sind. Hierbei befindet sich das erste Stellglied 42 über die Länge der Führung 36 gesehen im Wesentlichen im Bereich der Mitte der Führung 36. Wird das erste Verstellelement 32 in Richtung des Pfeils 80 verdreht, erfolgt kein Verschwenken der in der ersten Richtung X verlaufenden Lamellen 40, wenn sich das erste Stellglied 42 entlang eines Abschnitts 70 ohne Steigung der Führung 36 bewegt. Jedoch erfolgt hierbei ein Verschwenken der in der zweiten Richtung Y verlaufenden Lamellen 16, da das zweite Stellglied 44 in Richtung des Pfeils 80 um die Längsachse 86 verdreht wird. Wird das erste Verstellelement 32 weiter verdreht, so gelangt das erste Stellglied 42 in einen Abschnitt 72 der Führung 36 mit Steigung, so dass beim Weiterdrehen des ersten Verstellelementes 32 das erste Stellglied 42 und somit das Verlagerungselement 40 entsprechend dem Pfeil 82 nach oben oder unten bewegt werden. Hierbei erfolgt ein Verschwenken der in der ersten Richtung X verlaufenden Lamellen 14. Der Grad der Steigung in der Führung 36 gibt in den Abschnitten 72 mit Steigung an, um welches Maß die Lamellen 14 verschwenkt werden. Es ist ersichtlich, dass beim Verdrehen des ersten Verstellelementes 32 in den Abschnitten 72 mit Steigung sowohl ein Verschwenken der in der ersten Richtung X verlaufenden Lamellen 14 in Abhängigkeit des Grads der Steigung und ein Verschwenken der zweiten Richtung Y verlaufenden Lamellen 16 erfolgt und in den Abschnitten 70 ohne Steigung nur ein Verschwenken der in der zweiten Richtung Y verlaufenden Lamellen 16 erfolgt.

Fig. 3 zeigt eine schematische Darstellung von Komponenten eines Luftausströmers 10 in Draufsicht. Die obere in der ersten Richtung X verlaufende Lamelle 14 ist an ihrem rechten Ende abgerundet ausgebildet, wobei dies auf Grund einer abgerundeten Ausführung der Ecken des Gehäuses 22 (siehe Fig. 1) notwendig ist, um ein Verkanten der Lamelle 14 zu verhindern. Ferner sind sowohl die in der ersten Richtung X verlaufenden Lamellen 14 als auch die in der zweiten Richtung Y verlaufenden Lamellen 16 so ausgebildet, dass die Anbindung an die erste Koppeleinrichtung 18 bzw. die zweite Koppeleinrichtung 20 durch entsprechende Einschnitte in den Lamellen 14 und 16 über Zapfen 62 und 64 sowohl links und rechts als auch von oben und unten erfolgt. Diese alternative Ausgestaltung dient dazu, ungewollte Bewegungen (Klappern) zu verhindern und ein Spiel möglichst gering zu halten.

Wie Fig. 3 entnommen werden kann, erfolgt beim Verdrehen des ersten Verstellelementes 32 in Richtung des Pfeils 80 eine Verlagerung der zweiten Koppeleinrichtung 20 in Richtung des Pfeils 84. Das erste Verstellelement 32 ist über eine Antriebswelle 78 mit dem Elektromotor 30 verbunden. Wird die Antriebswelle 78 über den Elektromotor 30 in Richtung des Pfeils 80 verdreht, so erfolgt ebenso ein Verdrehen des ersten Verstellelementes 32. Die Antriebswelle 78 und das erste Verstellelement 32 sind entsprechend miteinander verbunden. Beim Verdrehen des ersten Verstellelementes 32 wird das an der oberen Fläche 38 des ersten Verstellelementes 32 angeordnete zweite Stellglied 44 ebenfalls in gleicher Weise in Richtung des Pfeils 80 verdreht. Das Verdrehen des zweiten Stellglieds 44 bewirkt durch die Aufnahme in dem Langloch 52 des zweiten Verstellabschnitts 48 ein Verschieben der zweiten Koppeleinrichtung 20 in Richtung des Pfeils 84. Die Lamellen 16 werden dadurch um die Lagerzapfen 56 verschwenkt. Die Zapfen 64 der Lamellen 16 sind in entsprechenden Öffnungen 68 der zweiten Koppeleinrichtung 20 verdrehbar aufgenommen.

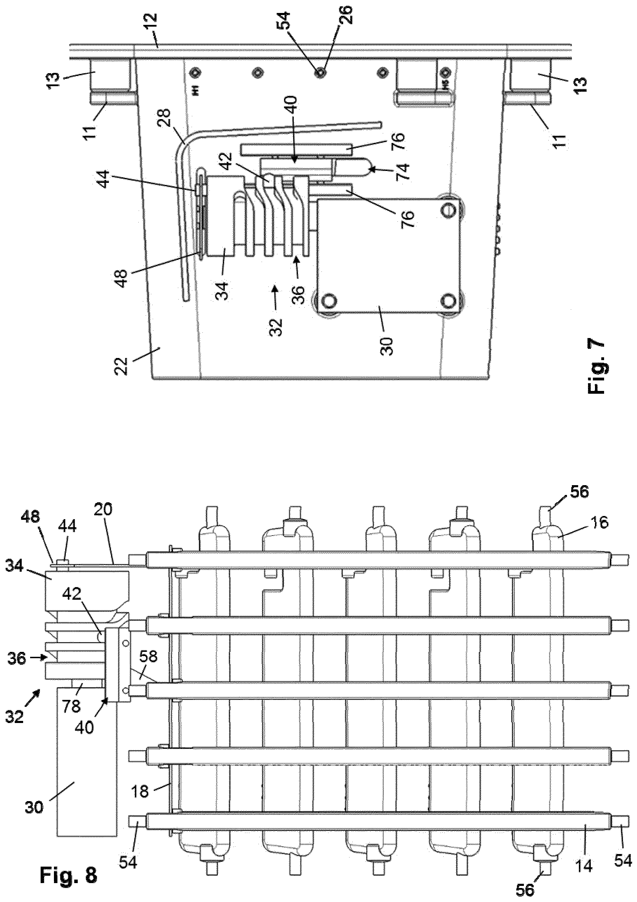

Die Position des Verlagerungselementes 40 ist über die Führungsstifte 60 und in Fig. 3 nicht dargestellte Führungsleisten 76 (siehe Fig. 7) vorgegeben, wobei das Verlagerungselement 40 nur in Richtung des Pfeils 82 (siehe Fig. 2) bewegt werden kann.

Fig. 4 zeigt eine weitere schematische Darstellung von Komponenten des Luftausströmers 10 in perspektivischer Ansicht. Fig. 4 zeigt nur den Elektromotor 30, das erste Verstellelement 32, das Verlagerungselement 40 sowie die erste Koppeleinrichtung 18 und die zweite Koppeleinrichtung 20. Der Mitnehmer 58 des Verlagerungselementes 40 ist in dem Langloch 50 des ersten Verstellabschnitts 46 aufgenommen. Die erste Koppeleinrichtung 18 weist Öffnungen 66 auf. In den Öffnungen 66 sind die Zapfen 62 der in der ersten Richtung X verlaufenden Lamellen 14 aufgenommen. Die zweite Koppeleinrichtung 20 weist Öffnungen 68 auf. In den Öffnungen 68 sind die Zapfen 64 der in der zweiten Richtung Y verlaufenden Lamellen 16 aufgenommen.

Der Mitnehmerabschnitt ist über ein nicht bezeichnetes Verbindungsteil mit dem Verlagerungselement 40 verbunden. Das optional vorgesehene Verbindungsteil unterstützt den Mitnehmer 58, wobei ein Brechen oder Verbiegen des Mitnehmers 58 verhindert wird.

Fig. 5 zeigt eine schematische Darstellung eines ersten Verstellelementes 32. Das erste Verstellelement 32 weist an seiner oberen Fläche 38 ein zweites Stellglied 44 auf, das in einem Langloch 50 eines zweiten Verstellabschnitts 48 einer zweiten Koppeleinrichtung 20 aufgenommen ist. Das erste Verstellelement 32 ist im Wesentlichen zylinderförmig ausgebildet und weist an seiner äußeren Umfangsfläche 34 eine Führung 36 auf. Die Führung 36 ist als abgestufte Helix ausgebildet und weist Abschnitte 70 ohne Steigung und Abschnitte 72 mit Steigung auf. In Fig. 5 ist jeweils nur ein Abschnitt 70 ohne Steigung und ein Abschnitt 72 mit Steigung bezeichnet.

Die Abschnitte 70 ohne Steigung erstrecken sich im Wesentlichen um die Hälfte des Umfangs des ersten Verstellelementes 32. Die Abschnitte 70 ohne Steigung erstrecken sich jedoch nicht um die gesamte Hälfte des Umfangs des ersten Verstellelementes 32. In bevorzugten Ausführungsformen erstrecken sich jeweils ein Abschnitt 70 ohne Steigung und ein Abschnitt 72 mit Steigung zusammen um die Hälfte des Umfangs des ersten Verstellelementes 32. In derartigen Ausführungen erfolgt bei einer halben Umdrehung des ersten Verstellelementes 32 um die Längsachse 86 ein Verschwenken der in der ersten Richtung X verlaufenden Lamellen 14 im Abschnitt 72 mit Steigung und anschließend ein Verschwenken von in der zweiten Richtung Y verlaufenden Lamellen 16 von einer Extremstellung in eine andere Extremstellung, ohne dass die in der ersten Richtung X verlaufenden Lamellen 14 weiter verschwenkt werden, da das erste Stellglied 42 sich während des Verdrehens im Abschnitt 70 ohne Steigung der Führung 36 befindet. Die Führung 36 weist einen Anfangs- und einen Endpunkt auf. Ferner weist die Führung 36 sieben Abschnitte 70 ohne Steigung (Steigung gleich Null) auf. Dadurch ergeben sich sieben Verschwenkstellungen der in der ersten Richtung X verlaufenden Lamellen 14.

Fig. 6 zeigt eine schematische Darstellung von Komponenten eines Luftausströmers 10 in Seitenansicht. In Fig. 6 befinden sich die in der ersten Richtung X verlaufenden Lamellen 14 und die in der zweiten Richtung Y verlaufenden Lamellen 16 in der Neutralstellung des Luftausströmers 10, wobei die Lamellen 14 und 16 nicht ausgelenkt bzw. verschwenkt sind. Hierbei befindet sich das erste Stellglied 42 im Wesentlichen in der Mitte der Führung 36.

Fig. 7 zeigt eine weitere schematische Darstellung von Komponenten eines Luftausströmers 10 in Seitenansicht, wobei das Gehäuse 22 mit der Abdeckung 28 dargestellt ist. Fig. 7 zeigt ferner eine Führungsöffnung 74. Die Führungsöffnung 74 ist als Langloch ausgebildet. Parallel zu der Führungsöffnung 74 sind Führungsleisten 76 angeordnet. In den Führungsleisten 76 sind die Führungsstifte 60 entlang des Pfeils 82 (Fig. 2) verschiebbar angeordnet. Der Mitnehmer 58 ragt durch die Führungsöffnung 74 hindurch. Das Gehäuse 22 weist im Bereich der zweiten Koppeleinrichtung 20 ebenfalls eine Öffnung auf, durch welche die zweite Koppeleinrichtung 20 aus dem Gehäuse 22 zumindest teilweise herausragt.

In Fig. 7 sind ferner die Verbindungselemente 13 der Blende 12 dargestellt. Das Gehäuse 22 ist durch die Vorsprünge 11 mit der Blende 12 und deren Verbindungselementen 13 sowie Verbindungsmitteln (z.B. Schrauben) verbunden.

In den Fig. 8 bis 11 sind verschiedene Stellungen der Lamellen 14 und 16 dargestellt.

In Fig. 8 sind die Zapfen 64 der Lamellen 16 nach links verschwenkt, da das erste Verstellelement 32 und das zweite Stellglied 44 entsprechend verdreht sind (Position zweites Stellglied 44 links). Dementsprechend sind die Lamellen 16 verschwenkt.

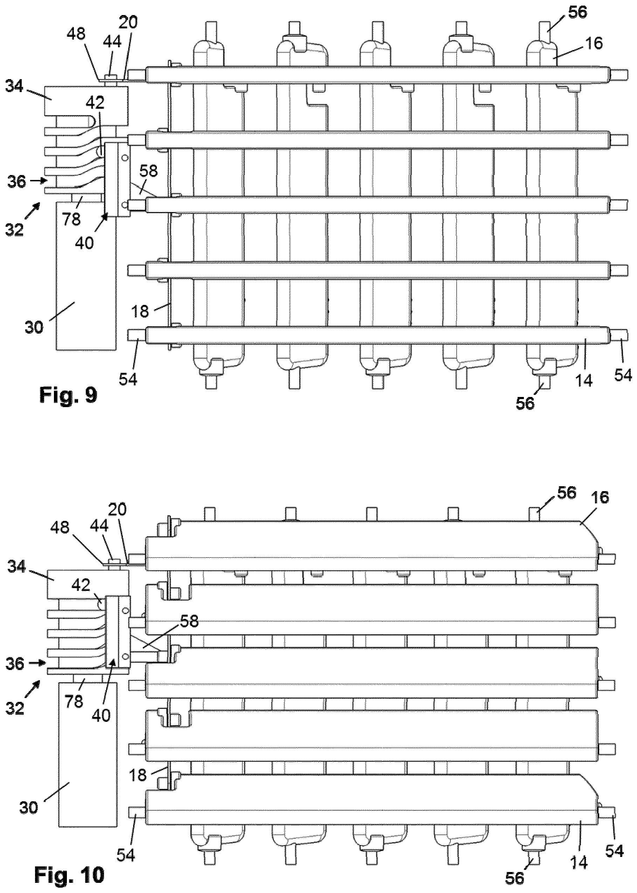

In Fig. 9 sind die Zapfen 64 der Lamellen 16 nach rechts verschwenkt, wobei das erste Verstellelement 32 und das zweite Stellglied 44 entsprechend um die Längsachse des ersten Verstellelementes 32 gedreht sind und sich das zweite Stellglied 44 in einer Position rechts befindet. Die Lamellen 16 sind entgegengesetzt zu der in Fig. 8 gezeigten Stellung verschwenkt.

Die Lamellen 14 sind bei den in den Fig. 8 und 9 gezeigten Stellungen nicht verschwenkt, da das erste Stellglied 42 auf Grund der Ausgestaltung der Führung 36 nicht nach oben oder unten verlagert wird. Das zweite Stellglied 42 befindet sich in den Stellungen der Fig. 8 und 9 in einem Abschnitt 70 mit einer Steigung gleich Null bzw. wird in einem Abschnitt 70 bewegt.

Fig. 10 zeigt einen Zustand des Luftausströmers 10, wobei sowohl die Lamellen 16 als auch die Lamellen 14 verschwenkt sind.

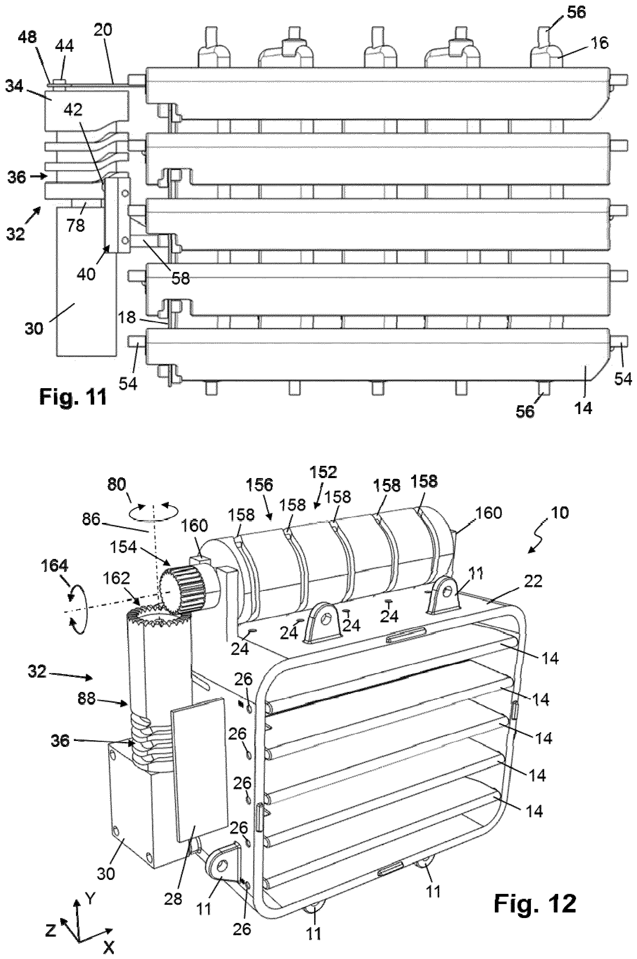

Fig. 11 zeigt ebenso einen Zustand des Luftausströmers 10, wobei sowohl die in der ersten Richtung X verlaufenden Lamellen 14 als auch die in der zweiten Richtung Y verlaufenden Lamellen 16 verschwenkt sind.

Die Fig. 10 und 11 zeigen jeweils Extremstellungen, was bedeutet, dass sowohl die Lamellen 14 als auch die Lamellen 16 sich in ihren Endstellungen (maximales Verschwenken) befinden. In Fig. 10 ist das erste Stellglied 42 an dem oberen Ende der Führung 36 angelangt und in Fig. 11 ist das erste Stellglied 42 an einem unteren Ende der Führung 36 angelangt.

Über den Elektromotor 30 wird die Antriebswelle 78 und somit das erste Verstellelement 32 verdreht. Bei einer im Wesentlichen halben Umdrehung des ersten Verstellelementes 32 wird das zweite Stellglied 44 von einer ersten Extremstellung in eine zweite Extremstellung verbracht, wobei die Lamellen 16 entweder nach links oder rechts verschwenkt werden. Befindet sich das erste Stellglied 42 in einem Abschnitt 70 ohne Steigung, so werden die Lamellen 14 nicht verschwenkt. Befindet sich das erste Stellglied 42 in einem Abschnitt 72 mit Steigung bzw. durchfährt das erste Stellglied 42 einen Abschnitt 72 mit Steigung, so werden die Lamellen 14 über die Kopplung des Verlagerungselementes 40, welches das erste Stellglied 42 aufweist, sukzessive nach oben oder unten verschwenkt, wobei Fig. 10 einen Zustand zeigt, in dem ausströmende Luft nach unten abgelenkt wird und Fig. 11 einen Zustand zeigt, in welchem ausströmende Luft aus dem Luftausströmer 10 nach oben abgelenkt wird.

Der Elektromotor 30 weist in den Figuren nicht dargestellte Anschlüsse auf, die mit Mitteln oder Einrichtungen zum Steuern des Elektromotors 30 verbunden sind. So kann in einer Mittelkonsole oder einem Armaturenbrett eines Kraftfahrzeugs ein berührungsempfindliches Bedienfeld angeordnet sein, welches die Steuerung des Elektromotors 30 ermöglicht. Die Ausbildung der Führung 36 als abgestufte Helix und das zweite Stellglied 44 ermöglichen ein Verbringen der Lamellen 14 und 16 des Luftausströmers 10 in sämtliche Stellungen, wie sie auch bei herkömmlichen Luftausströmern erreicht werden. Im Gegensatz zu bekannten Luftausströmern weist der Luftausströmer, wie er in den Fig. 1 bis 11 dargestellt ist, nur einen Elektromotor 30 auf, der mit dem ersten Verstellelement 32 und dem Verlagerungselement 40 gekoppelt ist. Diese übertragen die Bewegung des Elektromotors 30 über die erste Koppeleinrichtung 18 und die zweite Koppeleinrichtung 20 auf die Lamellen 14 und 16. Es ist damit möglich, sämtliche Stellungen sowohl der in der ersten Richtung X verlaufenden Lamellen 14 als auch der in der zweiten Richtung Y verlaufenden Lamellen 16 zu erreichen.

Der Durchmesser und die Höhe des ersten Verstellelements 32 sind an die Ausgestaltung eines Luftausströmers anzupassen. Ferner ist die Führung 36 an einen Luftausströmer und die gewünschten Verschwenkgrade der Lamellen des Luftausströmers anzupassen. Insbesondere sind die Länge der Führung 36, die Anzahl der Abschnitte 70 mit einer Steigung gleich Null, die Anzahl der Abschnitte 72 mit einer Steigung und die Steigung entsprechend zu wählen, um die gewünschten Verschwenkstellungen für einen Luftausströmer zu erreichen. Darüber hinaus sind die Länge der Abschnitte 70 mit einer Steigung gleich Null und die Länge der Abschnitte 72 mit einer Steigung entsprechend der gewünschten Ausgestaltung eines Luftausströmers festzulegen.

### Zweite Ausführungsform

Die Fig. 12 bis 16 zeigen eine zweite erfindungsgemäße Ausführungsform eines Luftausströmers 10.

Entsprechend der Ausgestaltung des Luftausströmers 10 in Bezug auf die Anordnung der in der ersten Richtung X verlaufenden Lamellen 14 sowie deren Verschwenken über die Führung 36 des ersten Verstellelementes 32 wird auf den Luftausströmer 10 der ersten Ausführungsform Bezug genommen.

Fig. 12 zeigt eine perspektivische Ansicht eines Luftausströmers 10 in einer zweiten Ausführungsform. Der Luftausströmer 10 weist ein erstes Verstellelement 32 auf, welches im Wesentlichen vollständig aus einem zylinderförmigen Abschnitt 88 gebildet ist, an dessen oberen Ende ein Zahnradabschnitt 162 angeordnet ist. Ferner weist das Gehäuse 22 an seiner Oberseite zwei Lager 160 auf, über welche ein zweites Verstellelement 152 drehbar gelagert ist. Das zweite Verstellelement 152 weist einen Zahnradabschnitt 154 auf, der in Eingriff mit dem Zahnradabschnitt 162 des ersten Verstellelementes 32 steht. Die Längsachse 86 des ersten Verstellelementes 32 verläuft im Wesentlichen in einem rechten Winkel zu der Längsachse des zweiten Verstellelementes 152. Wird das erste Verstellelement 32 um dessen Längsachse 86 in Richtung des Pfeils 80 verdreht, so erfolgt ebenso ein Verdrehen des zweiten Verstellelementes 152 in Richtung des Pfeils 164. Das zweite Verstellelement 152
weist einen zylinderförmigen Abschnitt 156 auf, in dem fünf Führungen 158 eingearbeitet sind. Die Führungen 158 sind im Wesentlichen als umlaufende endlose Führungsnuten ausgebildet. In diese Führungen 158 greifen Zapfen 122, die an den Lamellen 16 beabstandet zu deren durch die Lagerzapfen 56 verlaufenden Drehachsen angeordnet sind.

Wird das erste Verstellelement 32 verdreht, so erfolgt ein Verschwenken der in der ersten Richtung X verlaufenden Lamellen 14, wie bereits für die erste Ausführung eines Luftausströmers 10 beschrieben, und zudem ein Verschwenken der in der zweiten Richtung Y verlaufenden Lamellen 16 entsprechend der Ausbildung der Führungen 158.

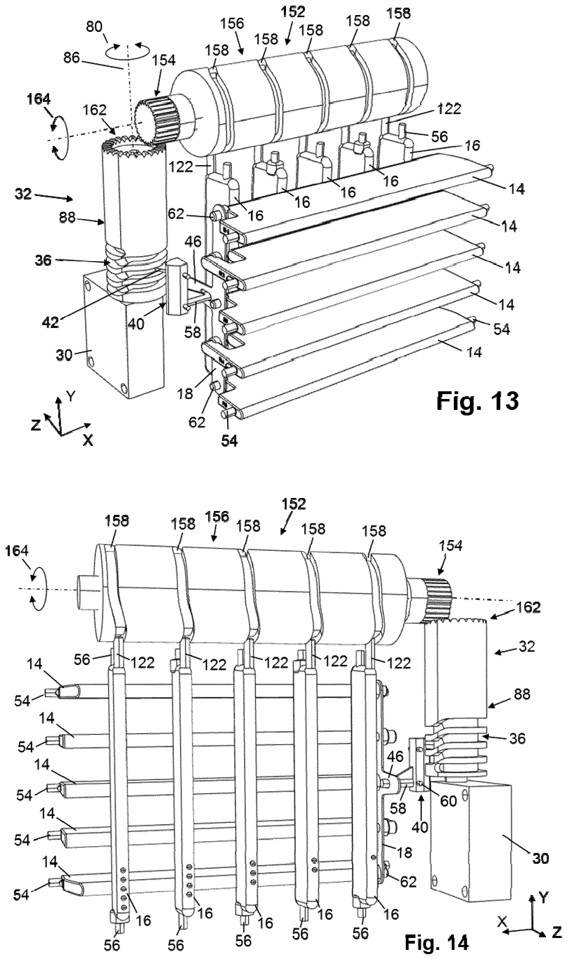

Fig. 13 zeigt eine weitere Ansicht des Luftausströmers 10 der zweiten Ausführungsform ohne Gehäuse 22. Fig. 13 zeigt, dass die Zapfen 122 beabstandet zu den Lagerzapfen 56 angeordnet sind. Die Zapfen 122 ragen durch Öffnungen in dem Gehäuse 22 nach oben und sind in den Führungen 158 geführt. Erfolgt ein Verdrehen des ersten Verstellelementes 32, und damit ein Verdrehen des zweiten Verstellelementes 152 in Richtung des Pfeils 154, werden die Lamellen 16 entsprechend dem Drehwinkel und der Ausbildung der Führungen 158 verschwenkt.

Insbesondere können die Führungen 158 jeweils unterschiedlich ausgebildet sein, so dass die einzelnen Lamellen 16 vollkommen unterschiedlich zueinander verschwenkt werden können. Jedoch können die Lamellen 16 auch gemeinsam verschwenkt werden und zudem Spot- und Diffusstellungen erreicht werden. Der Grad des Verschwenkens, wobei auch Abschnitte vorgesehen sein können, die kein Verschwenken einer Lamelle 16 bewirken, ist lediglich von der Ausbildung der Führungen 158 abhängig. Entsprechend sind die Führungen 158 so ausgebildet, dass in sämtlichen Stellungen der Lamellen 14 ein Verschwenken der Lamellen 16 in allen Stellungen möglich ist und weiter Spot- und Diffusstellungen in allen Positionen bzw. Schwenkstellungen der Lamellen 14 erreicht werden können.

Fig. 14 zeigt einen Blick auf die Rückseite des Luftausströmers 10 der zweiten Ausführungsform ohne Gehäuse. Obwohl die Führungen 158 in Fig. 14 im Wesentlichen identisch ausgebildet sind, können diese jedoch auch anderweitig ausgeführt sein. Die Ausbildung des zweiten Verstellelementes 152 als Walze mit umlaufenden Führungsnuten ermöglicht auf einfache Weise ein beliebiges Verstellen der Lamellen 16. Weitere Koppelelemente und Übertragungsglieder sind dafür nicht notwendig.

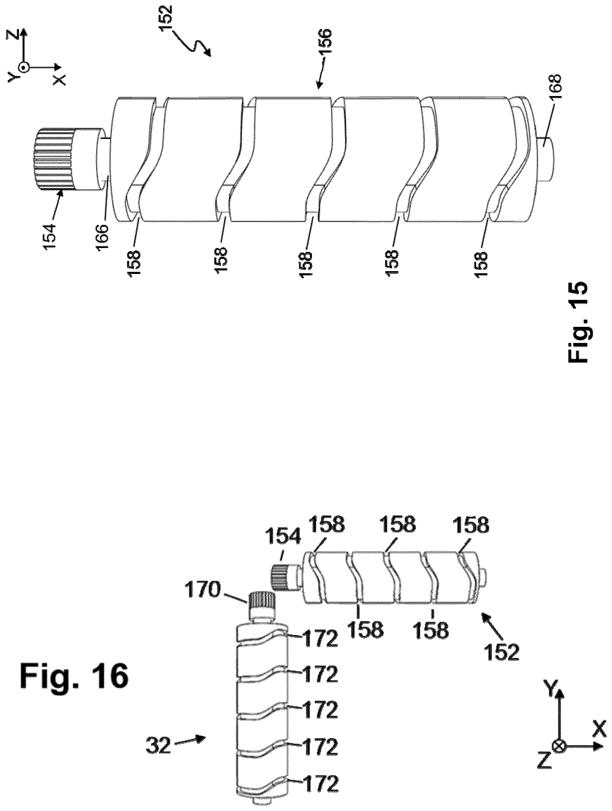

Fig. 15 zeigt eine perspektivische Ansicht des zweiten Verstellelementes 152. Das zweite Verstellelement 152 weist zwischen dem zylinderförmigen Abschnitt 156 und dem Zahnradabschnitt 154 einen Einschnitt 166 auf, der in einer entsprechenden Aufnahme in dem Lager 160 gelagert ist. Ferner weist das zweite Verstellelement 152 an dem unteren Ende einen Abschnitt 168 auf, der ebenso in einer Aufnahme eines Lagers 160 drehbar gelagert ist. In Bezug auf die Ausbildung der Führungen 158 wird auf die vorstehend gemachten Aussagen Bezug genommen, wobei diese nicht, wie in den Figuren dargestellt, im Wesentlichen identisch ausgebildet sein müssen. Vielmehr können die Führungen 158 verschieden zueinander ausgebildet sein, so dass sämtliche gewünschten Stellungen der Lamellen 16 erreicht werden können. Die Führungen 158 weisen zudem Abschnitte mit einer Steigung und Abschnitte ohne Steigung auf.

Bei Abschnitten ohne Steigung erfolgt kein Verschwenken der Lamellen 16.

Die Steuerung der Lamellen 14 und 16 über den Elektromotor 30 kann wie für die erste Ausführungsform beschrieben erfolgen.

### Weitere Ausführungsformen

Fig. 16 zeigt ein erstes Verstellelement 32 und ein zweites Verstellelement 152, welche im Wesentlichen ähnlich ausgebildet sind. Das erste Verstellelement 32 weist einen zylinderförmigen Abschnitt auf, in dem eine Vielzahl von Führungen 172 angeordnet ist. Die Führungen 172 können, anders als in Fig. 16 dargestellt, auch unterschiedlich ausgebildet sein, so dass damit gekoppelte Lamellen 14 gemeinsam und unterschiedlich zueinander verschwenkt werden können. Das erste Verstellelement 32 weist zudem einen Zahnradabschnitt 170 auf, der mit dem Zahnradabschnitt 154 des zweiten Verstellelementes 152 gekoppelt ist, so dass ein Verdrehen des ersten Verstellelementes 32 oder des zweiten Verstellelementes 152 ein Verdrehen des jeweils anderen Verstellelementes 152 oder 32 bewirkt. Die Ausbildung des zweiten Verstellelementes 152 entspricht im Wesentlichen dem zweiten Ausführungsbeispiel. Hierbei können die Führungen 158 auch unterschiedlich zueinander ausgebildet sein, so dass sämtliche Stellungen von Lamellen 16 erreicht werden können, wobei diese sowohl gemeinsam um einen gleichen Betrag zueinander verschwenkt werden können als auch um einen zueinander verschiedenen Betrag. Weitere Komponenten sind in Fig. 16 nicht dargestellt, jedoch ist ersichtlich, dass durch diese Ausführung weitere Koppelelemente und Übertragungsglieder nicht notwendig sind. Hierbei können sowohl in der ersten Richtung X verlaufende Lamellen 14 als auch in der zweiten Richtung Y verlaufende Lamellen 16 beliebig zueinander verschwenkt werden, wobei lediglich zwei Elemente (erstes Verstellelement 32 und zweites Verstellelement 152) zueinander verdreht werden.

Die Führungen 158 und 172 weisen dazu Abschnitte mit einer Steigung und Abschnitte ohne Steigung auf. Für die Wirkungsweise dieser Abschnitte wird auf die anderen Ausführungsformen verwiesen.

In weiteren nicht dargestellten Ausführungen weisen das zweite Verstellelement 152 an dem dem Zahnradabschnitt 154 abgewandten Ende oder das erste Verstellelement 32 an dem dem Zahnradabschnitt 170 abgewandten Ende einen weiteren Zahnradabschnitt auf, der mit einem Zahnradabschnitt eines dritten Verstellelements in Eingriff steht. Das dritte Verstellelement kann ebenfalls zylinderförmig ausgebildet sein und weist eine geschlossenen umlaufende Führung auf, in der ein Verstellmittel zum Öffnen und Schließen einer Schließklappe aufgenommen ist. Das dritte Verstellelement verläuft bspw. parallel zu dem ersten oder dem zweiten Verstellelement 32 bzw. 152. Die Führung des dritten Verstellelements ist so ausgebildet, dass ein Endlosbetrieb (Drehen des Elektromotors in nur einer Richtung) möglich ist und ein Verbringen der Schließklappe in verschiedene Stellungen erfolgen kann.

Die Ausführung der Fig. 16 ermöglicht bspw. einen sogenannten Endlosbetrieb, wobei der Elektromotor zum Verschwenken der Lamellen in nur einer Richtung verdreht werden muss. Dies ermöglicht die Bereitstellung einer "Ventilatorfunktion" und vereinfacht zudem die Ansteuerung des Elektromotors zum Verstellen der Lamellen.

Im Rahmen der hierin offenbarten Lehre sind jedoch weitere Abwandlungen/Modifikationen möglich.

### Bezugszeichenliste

- 10: Luftausströmer
- 11: Vorsprung
- 12: Blende
- 13: Verbindungselement
- 14: Lamelle
- 16: Lamelle
- 18: erste Koppeleinrichtung
- 20: zweite Koppeleinrichtung
- 22: Gehäuse
- 24: Öffnungen
- 26: Öffnungen
- 28: Abdeckung
- 30: Elektromotor
- 32: erstes Verstellelement
- 34: äußere Umfangsfläche
- 36: Führung
- 38: obere Fläche
- 40: Verlagerungselement
- 42: erstes Stellglied
- 44: zweites Stellglied
- 46: erster Verstellabschnitt
- 48: zweiter Verstellabschnitt
- 50: Langloch
- 52: Langloch
- 54: Lagerzapfen
- 56: Lagerzapfen
- 58: Mitnehmer
- 60: Führungsstift
- 62: Zapfen
- 64: Zapfen
- 66: Öffnung
- 68: Öffnung
- 70: Abschnitt
- 72: Abschnitt
- 74: Führungsöffnung
- 76: Führungsleiste
- 78: Antriebswelle
- 80: Pfeil
- 82: Pfeil
- 84: Pfeil
- 86: Längsachse
- 88: zylinderförmiger Abschnitt
- 122: Zapfen
- 152: zweites Verstellelement
- 154: Zahnradabschnitt
- 156: zylinderförmiger Abschnitt
- 158: Führung
- 160: Lager
- 162: Zahnradabschnitt
- 164: Pfeil
- 166: Einschnitt
- 168: Abschnitt
- 170: Zahnradabschnitt
- 172: Führung

- X: erste Richtung
- Y: zweite Richtung
- Z: dritte Richtung

## Patentansprüche

1. Einrichtung zum Verstellen von im Wesentlichen senkrecht zueinander angeordneten verschwenkbaren Lamellen (14, 16) eines Luftausströmers (10), aufweisend ein erstes drehbar gelagertes Verstellelement (32), wobei
- das erste Verstellelement (32) mindestens einen zylinderförmigen Abschnitt (88) aufweist,
- das erste Verstellelement (32) in dem mindestens einen zylinderförmigen Abschnitt (88) mindestens eine Führung (36) aufweist, in welcher ein erstes Verlagerungselement (40) geführt ist,
- mindestens eine in einer ersten Richtung (X) verlaufende Lamelle (14) über das Verlagerungselement (40) mit dem ersten Verstellelement (32) gekoppelt ist, und
- mindestens eine in einer zweiten Richtung (Y), senkrecht zur ersten Richtung (X) verlaufende Lamelle mit dem ersten Verstellelement (32) gekoppelt ist,
aufweisend ein zweites drehbar gelagertes Verstellelement (152), wobei das erste Verstellelement (32) mit dem zweiten Verstellelement (152) und das zweite Verstellelement (152) mit mindestens einer in der zweiten Richtung (Y) verlaufenden Lamelle (16) gekoppelt ist, **dadurch gekennzeichnet, dass** das zweite Verstellelement (152) mindestens einen zylinderförmigen Abschnitt (156) aufweist und das zweite Verstellelement (152) in dem mindestens einen zylinderförmigen Abschnitt (156) mindestens eine Führung (158) aufweist, in der ein Verstellglied zum Verschwenken der mindestens einen in der zweiten Richtung (Y) verlaufenden Lamelle (16) geführt ist und wobei die Drehachse des zweiten Verstellelements (156) in einem rechten Winkel zur Drehachse des ersten Verstellelements (32) verläuft.

2. Einrichtung nach Anspruch 1, wobei das zweite Verstellelement (152) einen umlaufenden Zahnradabschnitt (154) aufweist, der mit einem umlaufenden Zahnradabschnitt (162; 170) des ersten Verstellelements (32) in Eingriff steht.

3. Einrichtung nach Anspruch 1 oder 2, wobei die mindestens eine Führung (36) als Helixkurve ausgebildet ist.

4. Einrichtung nach einem der Ansprüche 1 bis 3, wobei die mindestens eine Führung (36) als abgestufte Helixkurve ausgebildet ist, wobei die abgestufte Helixkurve gegenüber der Querschnittsfläche des zylinderförmigen Abschnitts (88) des ersten Verstellelements (32) und/oder des zylinderförmigen Abschnitts (156) des zweiten Verstellelements (152) Abschnitte (70) mit einer Steigung gleich Null und Abschnitte (72) mit einer Steigung aufweist.

5. Einrichtung nach einem der Ansprüche 1 bis 4, wobei die in der ersten Richtung (X) verlaufende Lamelle (14) über eine erste Koppeleinrichtung (18) mit weiteren in der ersten Richtung (X) verlaufenden Lamellen (14) verbunden ist und/oder die in der zweiten Richtung (Y) verlaufende Lamelle (16) über eine zweite Koppeleinrichtung (20) mit weiteren in der zweiten Richtung (Y) verlaufenden Lamellen (16) verbunden ist.

6. Einrichtung nach einem der Ansprüche 1 bis 5, wobei eine Vielzahl von in der ersten Richtung (X) verlaufenden Lamellen (14) über jeweils ein separates Verlagerungselement (40) in separaten Führungen (172) in dem ersten Verstellelement (32) mit dem ersten Verstellelement (32) gekoppelt ist, und/oder eine Vielzahl von in der zweiten Richtung (Y) verlaufenden Lamellen (16) jeweils in einer separaten Führung (158) in dem zweiten Verstellelement (152) mit dem zweiten Verstellelement (152) gekoppelt sind.

7. Einrichtung nach einem der Ansprüche 1 bis 6 , wobei das erste Verstellelement (32) oder das zweite Verstellelement (152) mit einer Antriebswelle (78) und/oder mit einem Elektromotor (30) oder einem Stellrad gekoppelt sind und/oder der Elektromotor (30) elektrisch mit Mitteln zum Einstellen der Drehzahl über Eingabevorrichtungen verbunden ist oder die Antriebswelle über mechanische Vorrichtungen steuerbar ist.

8. Einrichtung nach einem der Ansprüche 1 bis 7, wobei das erste Verstellelement (32) oder das zweite Verstellelement (152) mit einem dritten Verstellelement und das dritte Verstellelement mit einer Vorrichtung zum Öffnen und Schließen der Luftzufuhr zu dem Luftausströmer (10) gekoppelt sind.

9. Einrichtung nach einem der Ansprüche 1 bis 7, wobei das erste Verstellelement (32) oder das zweite Verstellelement (152) mit einer Vorrichtung zum Öffnen und Schließen der Luftzufuhr gekoppelt sind.

10. Einrichtung nach Anspruch 8 oder 9, wobei das erste Verstellelement (32), das zweite Verstellelement (152) oder das dritte Verstellelement eine Führung aufweisen, in welcher ein Verstellglied zum Öffnen und Schließen der Vorrichtung geführt ist.

## Claims

1. Device for adjusting pivotable slats (14, 16), which are arranged substantially perpendicularly to one another, of an air vent (10),
comprising a first rotatably mounted adjusting element (32), wherein
- the first adjusting element (32) has at least one cylindrical section (88),
- the first adjusting element (32) has in the at least one cylindrical section (88) at least one guide (36) in which a first displacing element (40) is guided,
- at least one slat (14) extending in a first direction (X) is coupled by way of the displacing element (40) with the first adjusting element (32), and
- at least one slat (16) extending in a second direction (Y) perpendicular to the first direction (X) is coupled with the first adjusting element (32),
and comprising a second rotatably mounted adjusting element (152), wherein the first adjusting element (32) is coupled with the second adjusting element (152) and the second adjusting element (152) is coupled with at least one slat (16) extending in the second direction (Y),
**characterised in that**
the second adjusting element (152) has at least one cylindrical section (156) and the second adjusting element (152) has in the at least one cylindrical section (156) at least one guide (158) in which an adjusting member for pivotation of the at least one slat (16) extending in the second direction (Y) is guided and wherein the axis of rotation of the second adjusting element (156) extends at a right angle to the axis of rotation of the first adjusting element (32).

2. Device according to claim 1, wherein the second adjusting element (152) has an encircling gearwheel section (154) meshing with an encircling gearwheel section (162; 170) of the first adjusting element (32).

3. Device according to claims 1 or 2, wherein the at least one guide (36) is formed as a helix curve.

4. Device according to any one of claims 1 to 3, wherein the at least one guide (36) is formed as a stepped helix curve, wherein the stepped helix curve has by comparison with the cross-sectional area of the cylindrical section (88) of the first adjusting element (32) and/or the cylindrical section (156) of the second adjusting element (152) sections (70) with a pitch equal to zero and sections (72) with a pitch.

5. Device according to any one of claims 1 to 4, wherein the slat (14) extending in the first direction (X) is connected by way of a first coupling device (18) with further slats (14) extending in the first direction (X) and/or the slat (16) extending in the second direction (Y) is connected by way of a second coupling device (20) with further slats (16) extending in the second direction (Y).

6. Device according to any one of claims 1 to 5, wherein a plurality of slats (14) extending in the first direction (X) is coupled with the first adjusting element (32) by way of a respective separate displacing element (40) in separate guides in the first adjusting element (32) and/or the slats (16) of a plurality extending in the second direction (Y) are each coupled with the second adjusting element (152) in a separate guide (158) in the second adjusting element (152).

7. Device according to any one of claim 1 to 6, wherein the first adjusting element (32) or the second adjusting element (152) is coupled with a drive shaft (78) and/or with an electric motor (30) or a setting wheel and/or the electric motor (30) is electrically connected with means for setting the rotational speed by way of input devices or the drive shaft is controllable by way of mechanical devices.

8. Device according to any one of claims 1 to 7, wherein the first adjusting element (32) or the second adjusting element (152) is coupled with a third adjusting element and the third adjusting element is coupled with a device for opening and closing the air feed to the air vent (10).

9. Device according to any one of claims 1 to 7, wherein the first adjusting element (32) or the second adjusting element (152) is coupled with a device for opening and closing the air feed.

10. Device according to claim 8 or 9, wherein the first adjusting element (32), the second adjusting element (152) or the third adjusting element has a guide in which an adjusting member for opening and closing the device is guided.

## Revendications

1. Dispositif de réglage de lamelles (14, 16) pivotantes d'un aérateur (10) agencées sensiblement perpendiculairement les unes aux autres, présentant un premier élément de réglage (32) logé de manière à pouvoir tourner, dans lequel
- le premier élément de réglage (32) présente au moins une section cylindrique (88),
- le premier élément de réglage (32) présente dans l'au moins une section cylindrique (88) au moins un guidage (36) permettant de guider un premier élément de déplacement (40),
- au moins une lamelle (14) s'étendant dans une première direction (X) est accouplée par le biais de l'élément de déplacement (40) au premier élément de réglage (32), et
- au moins une lamelle s'étendant dans une seconde direction (Y) perpendiculairement à la première direction (X) est accouplée au premier élément de réglage (32),
présentant un deuxième élément de réglage (152) logé de manière à pouvoir tourner, le premier élément de réglage (32) étant accouplé au deuxième élément de réglage (152) et le deuxième élément de réglage (152) étant accouplé à au moins une lamelle (16) s'étendant dans la seconde direction (Y), **caractérisé en ce que** le deuxième élément de réglage (152) présente au moins une section cylindrique (156) et le deuxième élément de réglage (152) présente dans l'au moins une section cylindrique (156) au moins un guidage (158) dans lequel un organe de réglage est guidé pour le pivotement de la au moins une lamelle (16) s'étendant dans la seconde direction (Y) et dans lequel l'axe de rotation du deuxième élément de réglage (156) s'étend à un angle droit par rapport à l'axe de rotation du premier élément de réglage (32).

2. Dispositif selon la revendication 1, dans lequel le deuxième élément de réglage (152) présente une section de roue dentée tournante (154) qui est en prise avec une section de roue dentée tournante (162 ; 170) du premier élément de réglage (32).

3. Dispositif selon la revendication 1 ou 2, dans lequel le au moins un guidage (36) est réalisé en tant que courbe hélicoïdale.

4. Dispositif selon l'une quelconque des revendications 1 à 3, dans lequel le au moins un guidage (36) est réalisé en tant que courbe hélicoïdale étagée, dans lequel la courbe hélicoïdale étagée présente, par rapport à la section transversale de la section cylindrique (88) du premier élément de réglage (32) et/ou de la section cylindrique (156) du deuxième élément de réglage (152) des sections (70) avec une pente égale à zéro et des sections (72) avec une pente.

5. Dispositif selon l'une quelconque des revendications 1 à 4, dans lequel la lamelle (14) s'étendant dans la première direction (X) est raccordée par le biais d'un premier dispositif d'accouplement (18) à d'autres lamelles (14) s'étendant dans la première direction (X) et/ou la lamelle (16) s'étendant dans la seconde direction (Y) est raccordée par le biais d'un second dispositif d'accouplement (20) à d'autres lamelles (16) s'étendant dans la seconde direction (Y).

6. Dispositif selon l'une quelconque des revendications 1 à 5, dans lequel une pluralité de lamelles (14) s'étendant dans la première direction (X) est accouplée, par le biais de respectivement un élément de déplacement (40) séparé dans des guidages (172) séparés dans le premier élément de réglage (32), au premier élément de réglage (32), et/ou une pluralité de lamelles (16) s'étendant dans la seconde direction (Y) est accouplée avec le deuxième élément de réglage (152) respectivement dans un guidage (158) séparé dans le deuxième élément de réglage (152).

7. Dispositif selon l'une quelconque des revendications 1 à 6, dans lequel le premier élément de réglage (32) ou le deuxième élément de réglage (152) est accouplé à un arbre d'entraînement (78) et/ou à un moteur électrique (30) ou à une roue de réglage et/ou le moteur électrique (30) est raccordé électriquement à des moyens de réglage de la vitesse de rotation par le biais de systèmes de saisie ou l'arbre d'entraînement peut être commandé par le biais de systèmes mécaniques.

8. Dispositif selon l'une quelconque des revendications 1 à 7, dans lequel le premier élément de réglage (32) ou le deuxième élément de réglage (152) est accouplé à un troisième élément de réglage et le troisième élément de réglage est accouplé à un système pour l'ouverture et la fermeture de l'amenée d'air à l'aérateur (10).

9. Dispositif selon l'une quelconque des revendications 1 à 7, dans lequel le premier élément de réglage (32) ou le deuxième élément de réglage (152) est accouplé à un système pour l'ouverture et la fermeture de l'amenée d'air.

10. Dispositif selon la revendication 8 ou 9, dans lequel le premier élément de réglage (32), le deuxième élément de réglage (152) ou le troisième élément de réglage présentent un guidage permettant de guider un organe de réglage pour l'ouverture et la fermeture du système.
